# EUROPÄISCHE PATENTANMELDUNG

(11) **EP 0 712 686 A1**
(43) Veröffentlichungstag der Anmeldung: **22.05.1996**
(21) Anmeldenummer: 95114365.0
(22) Anmeldetag: 13.09.1995
(51) Int. Cl.: B23Q 9/00, B25B 11/00, B27B 9/04

(54) **Führungsschiene**

(30) Priorität: 20.09.1994 DE 4433567
(71) Anmelder: Festo Tooltechnic KG, D-73728 Esslingen (DE)
(72) Erfinder: Barthelt, Hans-Peter, D - 73232 Esslingen (DE)
(74) Vertreter: Rüger, Rudolf, Dr.-Ing.

(57) **Zusammenfassung**

Eine Führungsschiene (1) für Elektrowerkzeuge (2) mit Handvorschub ist auf Ihrer Unterseite mit einem Saugkasten versehen, um sie ohne weitere Hilfsmittel an einem Werkstück festlegen zu können.

## Beschreibung

Aus der Praxis sind Führungsschienen bekannt, um beispielsweise Handkreissägen zu führen. Es soll trotz des Handvorschubs auf diese Weise ein exakt gerader und an der richtigen Stelle liegender Sägeschnitt entstehen.

Die Führungsschiene ist eine längliche Platte, auf deren Oberseite die Kreissäge gleitet. Die Unterseite der Führungsschiene ist mit Schaumstoffstreifen belegt, die wenn sie auf dem Werkstück aufliegen der Führungsschiene einen weitgehen sicheren Halt auf dem Werkstück geben sollen. Zur Führung des Werkzeugs ist auf der Oberseite der Führungsschiene eine über deren Länge durchlaufende Rippe vorgesehen, die von einer in der Fußplatte des Werkzeugs ausgebildeten Nut übergriffen wird. Dadurch ist das Werkzeug quer zu der Rippe praktisch spielfrei geführt.

Die Schaumstoffstreifen reichen jedoch nicht in jedem Fall aus, um die Führungsschiene rutschsicher auf dem Werkstück festzulegen. Zusätzlich ist deswegen in der Führungsrippe eine nach unten offene T-Nut enthalten, in die im Bedarfsfall Arme von Schraubzwingen einzuführen sind, mit denen die Führungsschiene an dem Werkstück festgeklemmt werden kann.

Allerdings ist das Festziehen der Schraubzwingen etwas umständlich, weil sich deren Griffe in aller Regel an der Unterseite des Werkstücks befinden und aus der Sicht des Handwerkers hinter der Schraubzwingenschine sind. Der Handwerker muß mit einer verkramften Handhaltung die Schraubzwinge bedienen.

Unbequem ist ferner die Handhabung der Schraubzwinge selbst. Bei ihr ist der eine Arm in der üblichen Weise längs der Schraubzwingenschiene verschieblich und wird durch Verklemmen gehalten. Leichte Erschütterungen bei der Handhabung lassen den bewegliche Arm an der Schraubzwingenschiene nach unten abgleiten.

Ausgehend hievon ist es Aufgabe der Erfindung eine Führungschiene zu schaffen, die ohne Schraubzwingen rutschfest auf dem Werkstück festzulegen ist.

Diese Aufgabe wird erfindungsgemäß mit der Führungsschiene mit den Merkmalen des Anspruchs 1 gelöst.

Mit Hilfe des Vakuumkastens an der Unterseite der Führungsschiene wird die Führungsschiene auf dem Werkstück sicher festgelegt. Bis zum Einschalten des Vakuums kann die Führungsschiene auf dem Werkstück im wesentlichen frei bewegt werden. Sobald die richtige Position erreicht ist, wird das Vakuum eingeschaltet, wodurch die Führungsschienen unverrückbar festgelegt ist. Hierzu müssen keine anderen Werkzeuge betätigt werde. Insbesondere ist es nicht mehr nötig unter das Werkstück zu greifen, was immer die Gefahr birgt, die Führungsschiene dabei aus ihrer gewünschten Lage zu verschieben.

Besonders einfach werden die Verhältnisse, wenn die Auflagefläche von wenigstens zwei parallel mit Abstand nebeneinander verlaufenden Streifen gebildet ist. In diesem Falle können die Streifen einen Teil des Dichtrandes des Vakuumkastens darstellen, wodurch die Bauhöhe der Führungsschiene besonders niedrig wird, so daß die Eintauchtiefe des Werkzeugs maximal ausgenutzt werden kann.

Weitere Wände des Vakuumkastens werden von elastischen Streifen gebildet, die sich zwischen den in Längsrichtung laufenden Streifen quer erstrecken.

Das für das Festhalten erforderliche Vakuum ist bei den modernen Werkzeugen besonders einfach zu erhalten, indem hierzu die in der Regel vorhandene Absaugeinrichtung mit herangezogen wird. Überraschenderweise reicht der von diesen Geräten erzeugte Unterdruck in Verbindung mit der verhältnismäßig kleinen Fläche an der Unterseite der Führungsschiene völlig aus. Es genügt, wenn der Unterdruck am vom Werkzeug abliegenden Ende des Saugschlauches, der das Werkzeug mit der Absaugeinrichtung verbindet, angeschlossen wird.

Gemäß einer Weiterbildung der erfindungsgemäßen Führungsschiene wird eine besonders platzsparende Vakuumzufuhr erreicht, wenn hierzu die Führungsrippe verwendet wird, die zu diesem Zweck rohrförmig gestaltet ist.

Um die neue Führungschiene möglichst flexibel einsetzen zu können, ist die Länge des Vakuumkastens kleiner als die Gesamtlänge der Führungsschiene. Beispielsweise genügt bei einer Führungschiene mit einer Länge von 1,4 m eine Länge des Vakuumkastens von ca. 40 cm.

Damit die Haltekraft möglichst groß wird, ist der Vakuumkasten zweckmäßigerweise mehr als halb so breit wie die Führungsschiene.

In der Zeichnung ist ein Ausführungsbeispiel des Gegenstands der Erfindung dargestellt. Es zeigen:
- Fig. 1: eine Führungschiene mit aufgesetzter Handkreissäge, in einer perspektivischen Darstellung,
- Fig. 2: die Führungsschiene nach Fig. 1 in einer verkürzten Ansicht von unten und

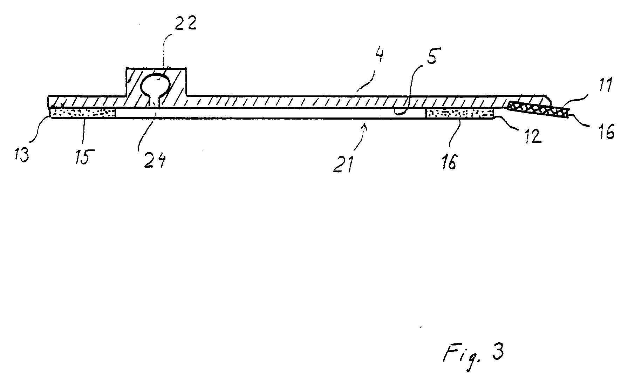

- Fig. 3: Die Führungsschiene nach Fig. 1 in einem Querschnitt längs der Linie I-I aus Fig. 2.

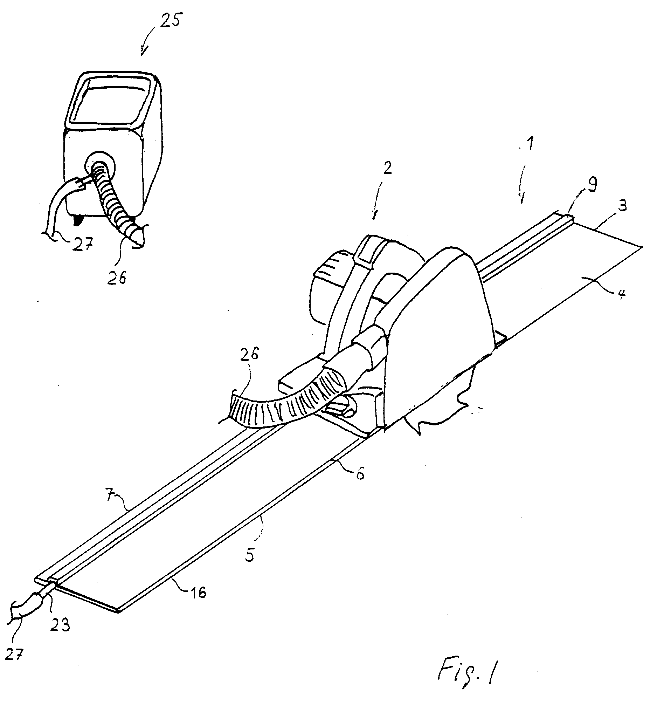

Fig. 1 zeigt eine Führungsschiene 1, auf der als Beispiel für ein Elektrowerkzeug mit Handvorschub eine Handkreissäge 2 aufgesetzt ist. Die Führungsschiene 1 dient dazu die Handkreissäge 2 exakt gerade über ein nicht veranschaulichtes Werkstück, auf dem die Führungsschiene 1 aufliegen würde, zu führen, um eine genau geraden Sägeschnitt zu erzielen. Die Handkreissäge 2 ist in bekannter Weise an eine Absaugeinrichtung angschlossen, um die beim Sägen entstehenden Späne abzusaugen.

Die Führungsschiene 1 weist eine längliche gerade und in der Draufsicht rechteckige Platte 3 auf, die von einer Oberseite 4, einer Unterseite 5 und zwei zueinander parallelen Längskanten 6, 7 begrenzt ist. Die Oberseite 4 ist eine Gleitfläche für eine Fußplatte 8 der Handkreissäge 2. Aus ihr steht eine leistenförmige Rippe 9 vor, die sich über die gesamte Länge der Führungsschiene 1 erstreckt. Die Rippe 9 hat einen rechteckigen Querschnitt und verläuft parallel zu den Längskanten 6, 7. Der Abstand der Rippe 9 von der Längskante 6 ist kleiner als der Abstand zu der Längskante 7, neben der im Einsatz das Sägeblatt der Handkereissäge 2 laufen würde.

Wie die Draufsicht auf die Unterseite 5 erkennen läßt, verläuft bei der Längskante 7 ein bandförmiger Streifen 11 aus weichem Vollgummi. Der Gummistreifen 11 , der auf die Unterseite 5 aufgekebt ist, steht geringfügig über die Längskante 6 über und dient als Splitterschutz, der beim ersten Gebrauch der Führungsschiene 1 von der Handkreisäge 2 auf das richtige Maß abgeschnitten wird.

Unmittelbar neben dem Gummistreifen 11 ist parallel dazu ein weiterer Streifen 12 auf der Unterseite 5 aufgeklebt. Der Streifen 12 besteht aus einem luftundurchlässigen Schaumstoff, beispielsweise aus Polyurethan. Ein weiterer Streifen 13 aus geschäumtem Polyurethan liegt parallel zu der Längskante 7 unmittelbar an diese angrenzend. Die beiden Schaumstoffstreifen 12 und 13 bilden mit ihren planen Unterseiten 14 bzw. 15 die Auflagefläche mit der die Führungsschiene 1 auf dem jeweiligen Werkstück aufliegt. Die Unterseiten 14 und 15 liegen deswegen auch in einer gemeinsamen Ebene, in der auch eine frei über die Längskante 6 überstehende Kante 16 des Gummistreifens 11 liegt, wenn die Führungsschiene 1 in der unten beschriebenen Weise auf dem Werkstück aufliegt.

In einem Abstand von einem Ende der Führungsschiene 1, der etwa der Länge der Fußplatte 8 gemessen in Vorschubrichtung entspricht, ist auf der Unterseite 5 ein sich zwischen den Schaumstoffstreifen 12 und 13 erstreckender Schaumstoffstreifen 17 vorgesehen, der ohne Spalt und somit weitgehend luftdicht an die Schaumstoffstreifen 12 und 13 anstößt. Im Abstand von ca. 40 cm liegt parallel zu dem Schaumstoffstreifen 17 ein Schaumstoffstreifen 18 auf der Unterseite 5, der gleichfalls abdichtend an den Schaumstoffstreifen 12 und 13 anliegt. Die Schaumstoffstreifen 17 und 18 weisen Unterseiten 19 bzw. 20 auf, die in derselben Ebene liegen wie die Unterseiten 14 und 15. Somit umgrenzen die Schaumstoffstreifen 12, 13, 17 und 18 eine flache Schale 21, deren Boden der von den Schaumstoffstreifen 12, 13, 17 und 18 umschlossene Bereich der Unterseite 5 der Platte 3 ist.

Die Schale 21, deren Höhe der Dicke der Schaumstoffstreifen 12, 13, 17 und 18 entspricht, ist ein Vakuumkasten.

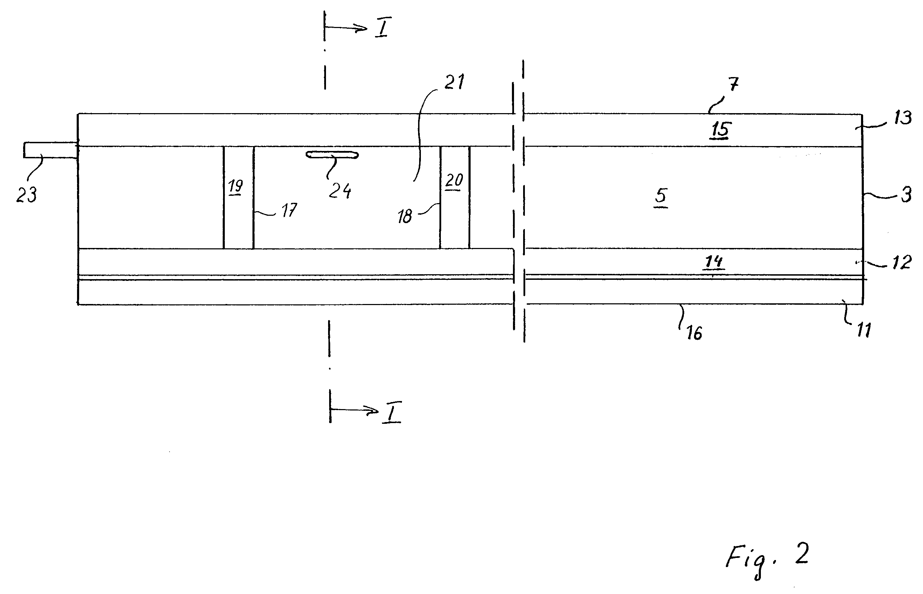

Der Querschnitt aus Fig. 2 zeigt, daß die Rippe 9 einen Kanal oder Durchlaß 22 enthält, der bei einem Schlauchanschluß 23 beginnt und bis zu dem Vakuumkasten 21 reicht. Innerhalb des Vakuumkastens 21 enthält die Unterseite 5 einen Längsschlitz 24, über den eine strömungsmäßige Verbindung zwischen dem Vakuumkasten 21 und dem Kanal 22 zu dem Schlauchanschluß 23 besteht. Auf der von dem Schlauchanschluß 23 abliegenden Seite des Schlitzes 24 ist der Kanal 23 durch einen nicht erkennbaren Stöpsel verschlossen. Dadurch ist der Vakuumkasten 21 nur mit dem Schlauchanschluß 23 verbunden.

Die Handhabung und die Funktionsweise der neuen Führungsschiene 1 ist wie folgt:
Eine Absaugeinrichtung 25 ist über einen Absaugschlauch 26 an den Späneauswurf der Handkreisäge 2 angeschlossen. Der Absaugschlauch 26 ist lediglich schematisch gezeigt.

Sodann wird über einen Schlauch 27 mit einer lichten Weite von ca. 10 mm eine Strömungsverbindung zwischen dem Schlauchanschluß 23 der Führungsschiene 1 und der Saugseite einer Absaugeinrichtung 26 hergestellt. Die Anschlußstelle des Schlauches 27 liegt in unmittelbarer Nähe des Anschlusses des Absaugschlauchs 26 an die Absaugeinrichtung 26, um den durch den Luftwiderstand des Absaugschlauchs 26 erzeugten Unterdruck ausnützen zu können.

Nachdem diese Verbindungen hergestellt sind, wird die Führungsschiene 1 auf dem betreffenden Werkstück positioniert, und zwar so, daß die über die Längskante 6 überstehende Kante 16 des Gummistreifens 11 an den gewünschten Schnitt anliegt. Danach wird die Absaugeinrichtung 25 eingeschaltet, wodurch in dem Vakuumkasten 21 ein Unterdruck entsteht, da über den Kanal 23, den Schlauchanschluß 26 und den Schlauch 27 die Luft aus dem Vakuumkasten 21 abgesaugt wird. Hierdurch kann sich die Führungsschiene 1 im Bereich des Vakuumkastens 21 auf dem Werkstück unverrückbar festsaugen. Sie wird auf diese Weise ohne Zuhilfenahme von anderen Spannwerkzeugen wie Schraubzwingen auf dem Werkstück festgehalten. Der Unterdruck an der Einmündung der Absaugeinrichtung 26 reicht zu Halten völlig aus.

Wenn in der beschriebene Weise die Führungsschiene 1 auf dem Werkstück festgesetzt ist, kann die Handkreissäge 2 auf der Führungsschiene 1 entlangbewegt werden, ohne die Führungsschiene 1 zu verrücken.

Im festgesaugten Zustand liegt der Gummistreifen 11 mit seiner freien Kante 16 auf dem Werkstück auf; auf Grund seiner Abmessungen und Lage auf der Unterseite 5 beeinträchtigt er die Abdichtwirkung der Schaumstoffstreifen 12, 13, 17 und 18 auf dem Werkstück nicht.

An stelle der Handkreissägen kann auch eine beispielsweise eine Diamant bestückte Trennmaschine verwendet werden. Außerdem ist die Vewendung der neuen Führungschiene nicht auf den Einsatz in Verbindung mit Holz oder Holzwerkstoffen beschränkt. Auch in Verbindung beispielsweise mit Stein läßt sich die Führungschiene verwenden.

## Patentansprüche

1. Führungsschiene (1) zum Führen von Elektrowerkzeugen (2) mit Handvorschub,
mit einem länglichen flachen Grundkörper (3), der eine Oberseite (4) und eine Unterseite (5) aufweist,
mit wenigstens einer an der Oberseite (4) befindlichen Führungsfläche, längs derer und auf der das Elektrowerkzeug (2) bewegbar ist,
mit wenigstens einer an der Unterseite (5) befindlichen Auflagefläche (14,15,19,20), mittels derer die Führungsschiene (1) auf einem Werkstück auflegbar ist,
mit einer an der Oberseite (4) angeordneten Führungsleiste (9), die zum Eingreifen in eine Führungsnut des Elektrowerkzeugs (2) vorgesehen ist,
mit wenigstens einem an der Unterseite (5) angeordneten Saugkasten (21), der über eine Leitung (27) an eine Saugvorrichtung (25) anzuschließen ist, bei Beaufschlagung mit Unterdruck die Führungsschiene (1) auf dem jeweiligen Werkstück unverrückbar festzulegen.

2. Führungsschiene nach Anspruch 1, dadurch gekennzeichnet, daß auf der Unterseite (5) elastische Streifen (12,13,17,18) befestigt sind, deren von der Unterseite (5) des Grundkörpers (3) wegweisende Flächen (14,15,19,20) in einer gemeinsamen Ebene liegen und die Auflagefläche bilden.

3. Führungsschiene nach Anspruch 1, dadurch gekennzeichnet, daß der Saugkasten (21) einen Rand aufweist, der in der Ebene der Auflagefläche liegt.

4. Führungsschiene nach Anspruch 3, dadurch gekennzeichnet, daß der Rand mit Dichtungsmitteln (12,13,17,18) versehen ist.

5. Führungsschiene nach Anspruch 4, dadurch gekennzeichnet, daß wenigstens ein Teil der Dichtungsmittel (12, 13,17,18) von den elastischen Streifen gebildet ist.

6. Führungsschiene nach Anspruch 1, dadurch gekennzeichnet, daß eine Wand des Saugkastens (21) von der Unterseite (5) des Grundkörpers (3) gebildet ist.

7. Führungsschiene nach Anspruch 1, dadurch gekennzeichnet, daß eine Wand des Saugkastens (21) von wenigstens einem Abschnitt einer Schmalseite wenigstens eines auf der Unterseite (5) befindlichen elastischen Streifens (12,13,17,18) gebildet ist.

8. Führungsschiene nach Anspruch 1, dadurch gekennzeichnet, daß lediglich ein Saugkasten (21) vorgesehen ist.

9. Führungsschiene nach Anspruch 1, dadurch gekennzeichnet, daß die Länge des Saugkstens (21) gemessen in Längsrichtung der Führungsschiene (1) kleiner ist als die Länge der Führungsschiene (1).

10. Führungsschiene nach Anspruch 9, dadurch gekennzeichnet, daß die Länge des Saugkstens (21) gemessen in Längsrichtung der Führungsschiene (1) kleiner ist als die halbe Länge der Führungsschiene (1).

11. Führungsschiene nach Anspruch 1, dadurch gekennzeichnet, daß die Breite des Saugkstens (21) gemessen in Querrichtung der Führungsschiene (1) kleiner ist als die Breite des Grundkörpers (3).

12. Führungsschiene nach Anspruch 11, dadurch gekennzeichnet, daß die Breite des Saugkstens (21) gemessen in Querrichtung der Führungsschiene (1) größer ist als die halbe Breite des Grundkörpers (3).

13. Führungsschiene nach Anspruch 1, dadurch gekennzeichnet, daß die Führungsleiste (9) einen Kanal (22) enthält, der mit dem Saugkasten (21) strömungsmäßig in Verbindung steht und der mit einem Anschluß (23) für die Saugvorrichtung (26) verbunden ist.

14. Führungsschiene nach Anspruch 1, dadurch gekennzeichnet, daß der Anschluß (23) zum Anschluß eines Schlauches vorgesehen ist.
